# EUROPEAN PATENT APPLICATION

(11) **EP 2 732 719 A2**
(43) Date of publication of application: **21.05.2014**
(21) Application number: 13157306.5
(22) Date of filing: 28.02.2013
(51) Int. Cl.: A44B 18/00

(54) **Adhesive fastener for foam molding and cushion thereof**

(30) Priority: 19.11.2012 TW 101143041
(71) Applicant: Taiwan Paiho Limited, Chang Hua Hsien (TW)
(72) Inventor: Cheng, Allen, Chang Hua Hsien (TW)
(74) Representative: Lang, Christian

(57) **Abstract**

An adhesive fastener for foam molding and cushion thereof are disclosed herein. The adhesive fastener comprises a strip (10). The strip (10) comprises a surface with a plurality of first hooks (103) and second hooks (104). The first hooks (103) are disposed on an adhesive area and the second hooks (104)are disposed on a surrounding area of the adhesive area. The arrange density of the first hooks is greater than the arrange density of the second hooks. Therefore, when the adhesive fastener is used in a foam material cushion, the adhesive and fastening function in the adhesive area is working normally and a combining force between the adhesive fastener and the foam material is performed well.

## Description

### BACKGROUND OF THE INVENTION

### 1. Field of the Invention

The present invention is related to an adhesive fastener and more particularly related to an adhesive fastener for foam molding.

### 2. Description of the Prior Art

The adhesive fastener was conceived by a Swiss engineer. The idea came to him from the burrs (seeds) of burdock. The adhesive fasteners consist of two components: typically, two lineal fabric strips which are attached to the opposing surfaces to be fastened. The first component features tiny hooks; the second features even smaller and "hairier" loops. When the two components are pressed together, the hooks catch in the loops and the two pieces fasten or bind temporarily.

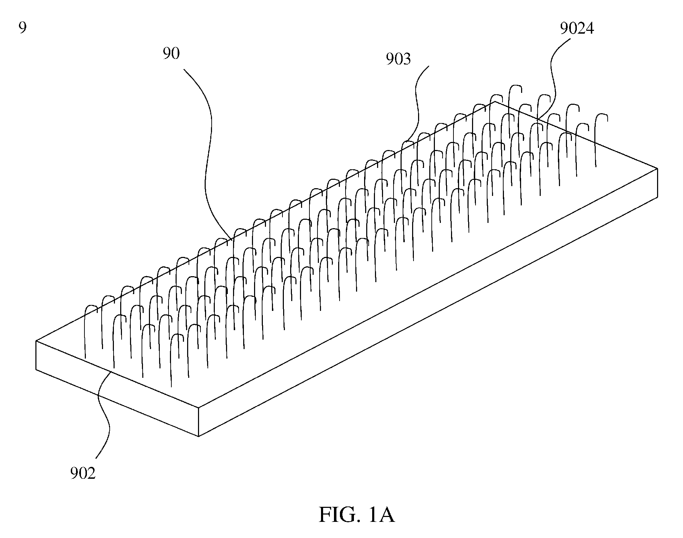

The adhesive fasteners are easy fastened and separated and are usually implemented with other objects in recent years. Please refer to FIG. 1A, which is a view illustrating a conventional adhesive fastener. An adhesive fastener 9 includes a strip 90 and the strip 90 includes a surface 902 and a plurality of hooks 903. The area where hooks 903 located is an adhesive area 9024. When the adhesive fastener 9 is implemented with a foam object, such as a cushion and so on, the hook 903 of the adhesive fastener 9 is faced outside to couple with another object with hair surface and the adhesive fastener 9 and the cushion are fasten together.

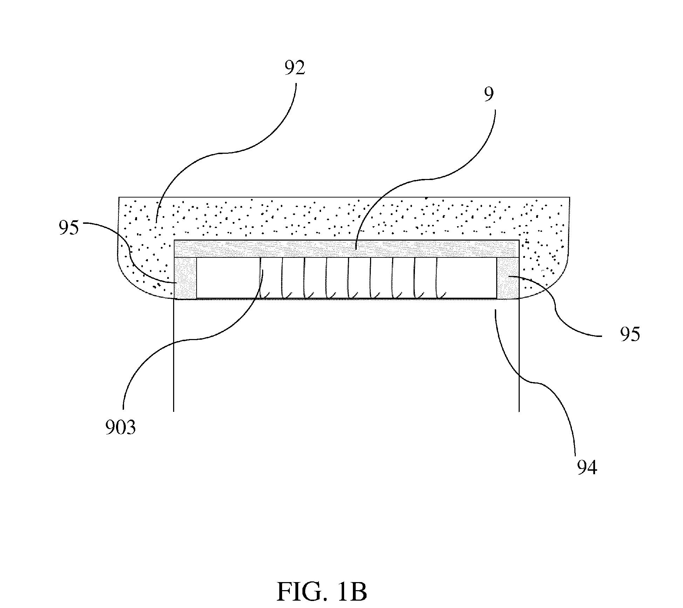

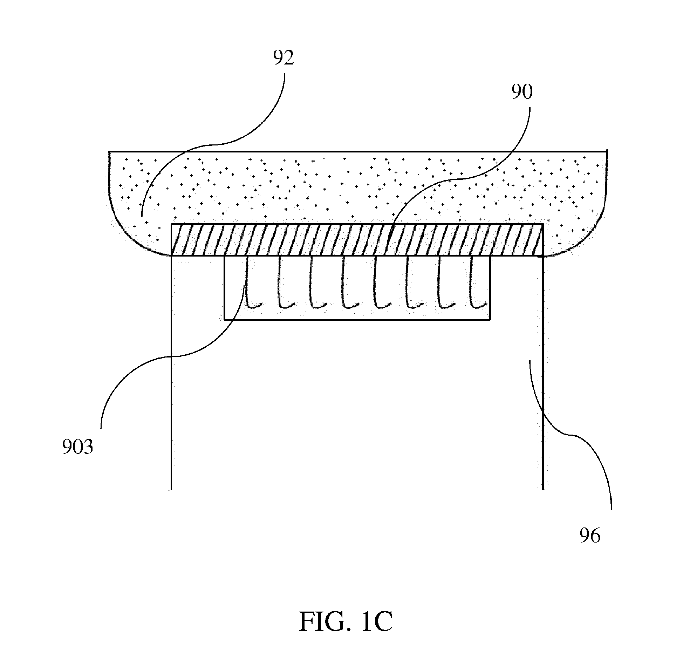

Please refer to FIG. 1B, which is a view illustrating a conventional adhesive fastener is forming with a foam material in an opening end mold. The manufacturing method to combine the adhesive fastener and the cushion is described as the following. First of all, in order to avoid the foam material 92 covering the hook 903 to affect the function of the adhesive fastener 9, one side of the adhesive fastener 9 includes a retaining wall 95. The adhesive fastener 9 is disposed within the mold and filled with the foam material 92. When the foam material 92 is solidified, the adhesive fastener 9 and the foam material 92 are forming together. However, if the opening end mold 94 is used, the retaining wall 95 is required to be formed on the adhesive fastener 9 to cause troubles and increase cost. And the adhesive force of the foam material 92 and the adhesive fastener 9 is not enough, so the adhesive fastener 9 is easy to loose from the foam material 92. Please refer to FIG. 1C, which is a view illustrating the conventional adhesive fastener and the foam material are formed and fasten together in the closing mold. When filling with the foam material 92 by using the closing end mold, it can avoid the foam material 92 covering the hook 902 of the adhesive fastener 9, but the adhesive force of the foam material 92 and the hook 903 is still not good enough and the adhesive fastener is easy to loose from the foam material 92. Therefore, it is easy to produce a defective item by the conventional adhesive fastener 9 in the opening end mold or the closing end mold to increase the cost.

According the drawbacks described above, it is necessary to provide an improvement to produce an item with better quality when using the adhesive fastener to produce the cushion with the foam material.

### SUMMARY OF THE INVENTION

In order to overcome the drawbacks described above, main object of the present invention is to provide an adhesive fastener for foam molding. The foam material will not be stuck within the adhesive area to cover the hooks and therefore the hooks and the corresponding loop component together can perform binding in a good manner. As a result, a good adhesive force is existed between the foam material and the adhesive fastener.

According to the object above, the present invention provides an adhesive fastener for foam molding, including a strip having a surface; a plurality of first hooks disposed on a first area of the surface of the strip with a first arranging density; and a plurality of second hooks disposed on a second area of the surface of the strip with a second arranging density. The second area is peripheral to the first area and the second arranging density is greater than the first arranging density.

Moreover, the present invention also provides a cushion with adhesive fastener including a foam body and at least one adhesive fastener, the foam body is formed by a foam material and the adhesive fastener. The foam body includes a concave for disposing the adhesive fastener. The foam material of the foam body is embedded with the peripheral hooks of the adhesive fastener for foam molding.

By the adhesive fastener provided in the present invention, it will have a better yield and the cost can be reduced when using the adhesive fastener to make a cushion.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1A is a view schematically illustrates a conventional adhesive fastener.
FIG. 1B is a view schematically illustrates a conventional adhesive fastener molded with a foam material in an opening end mold.
FIG. 1C is a view schematically illustrates a conventional adhesive fastener molded with a foam material in a closed end mold.
FIG.2 is a perspective view schematically illustrates an adhesive fastener in a first embodiment of the present invention.
FIG. 3 is a view schematically illustrates molding of the adhesive fastener in the first embodiment of the present invention with the foam material within an opening end mold.
FIG. 4 is a view schematically illustrates molding of the adhesive fastener in the first embodiment of the present invention with the foam material within a closing end mold.
FIG. 5 is a view schematically illustrates a cushion with the adhesive fastener in the first embodiment of the present invention.
FIG. 6 is a view schematically illustrates arrangement of the hooks on blocking zones of the adhesive fastener in the first embodiment of the present invention.
FIG. 7 is a view schematically illustrates arrangement of the hooks on the blocking zones of the adhesive fastener in a second embodiment of the present invention.
FIG. 8 is a view schematically illustrates shape of hooks disposed at different areas of an adhesive fastener in a third embodiment of the present invention.

### DESCRIPTION OF THE PREFERRED EMBODIMENT

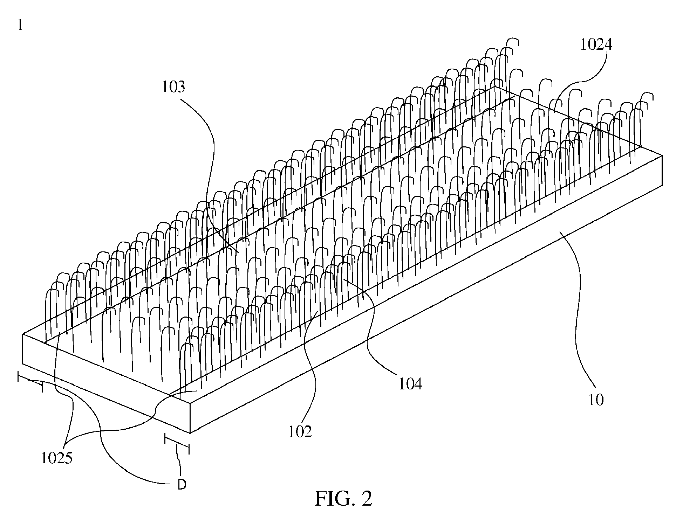

Firstly, please refer to FIG. 2, which is a perspective view illustrating an adhesive fastener molded with a foam material in a first embodiment of the present invention. As shown in FIG. 2, the adhesive fastener 1 includes a strip 10, and the strip 10 includes a surface 102, a plurality of first hooks 103 and a plurality of second hooks 104. The plurality of first hooks 103 are disposed at the middle of the surface 102 to form an adhesive area 1024 and are arranged with a first arranging density. The second hooks 104 are disposed at a surrounding area of the surface 102 and two sides thereof such that each side constitutes a blocking zone 1025. The width D in each of the blocking zone 1025 is 1mm∼3mm and the plurality of second hooks 104 are arranged with a second arranging density. The first arranging density and the second arranging density are number of hooks per unit area and the second arranging density is greater than the first arranging density.

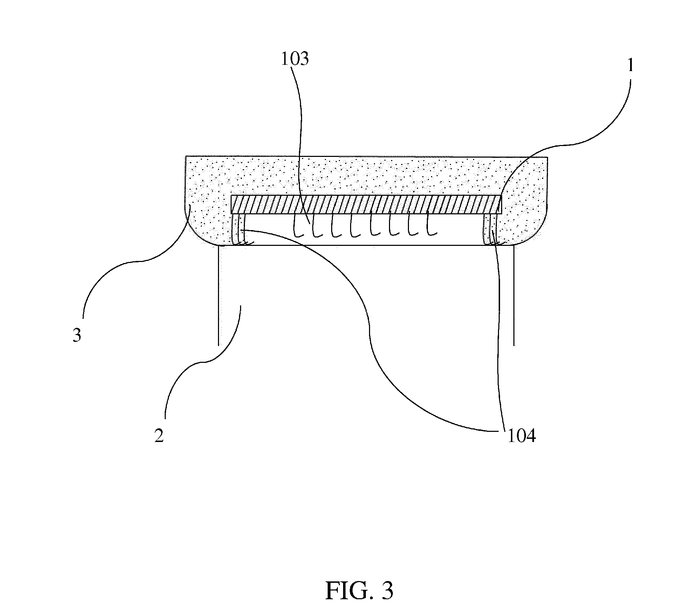

Now, please refer to FIG. 3, which is a view illustrating that the adhesive fastener is molded with the foam material within an opening end mold in the first embodiment of the present invention. As shown in FIG. 3 and FIG. 2, the surface 102 of the adhesive fastener 1 is faced down to dispose on the opening end mold 2 and the liquid of the foam material 3 is filled within the opening end mold 2. During filling with the liquid of the foam material 3, the liquid of the foam material 3 will flow to the blocking zone 1025 and flow a distance, usually about 1mm∼3mm, on the surface 102. Because stopping by the second hook 104, the foam material 3 will be solidified on the blocking zone 1025 and won't flow to the adhesive area 1024. Therefore, during filling with the liquid of the foam material 3, the function of the first hooks 103 will not be affected by the leakage of the foam material 3 and the first hooks 103 are able to successfully bind with a corresponding hook in future. Moreover, because the foam material 3 is stopped by the second hooks 104 and solidified on the blocking zone 1025, the foaming material 3 and the second hooks 104 are embedded and interrupted to each other such that the foam material 3 is well and firmly adhered to the adhesive fastener 1. In addition, in the practical manner, the height of the first hooks 103 is smaller than the height of the second hooks 104 to avoid that the first hooks 103 are depressed and damaged by the mold.

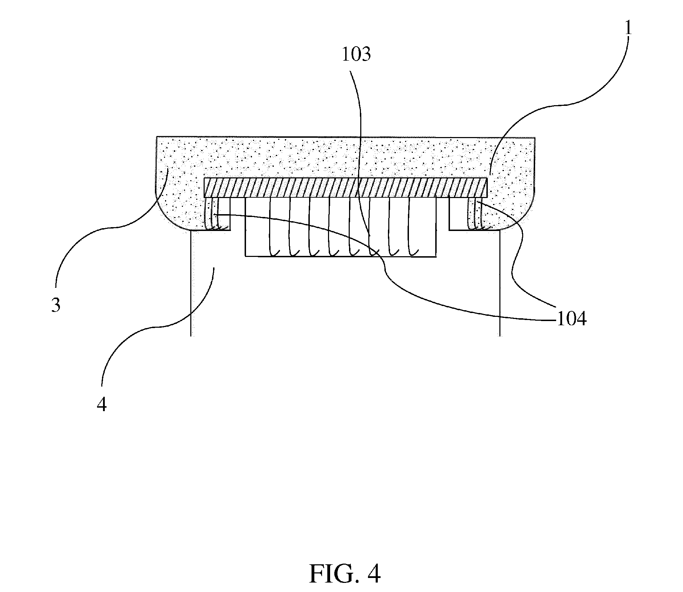

Now, please refer to FIG. 4, which is a view illustrating that the adhesive fastener is molded with material within a closing end mold in the first embodiment of the present invention. As shown in FIG. 4 and FIG. 2, the surface 102 of the adhesive fastener 1 is faced down to dispose on the closing end mold 4 and the liquid of the foam material 3 is filled within the opening end mold 4. During filling with the liquid of the foam material 3, the liquid of the foam material 3 will flow to the blocking zone 1025 and flow a distance, usually about 1mm∼3mm, on the surface 102. Because stopping by the second hook 104, the foam material 3 will be solidified on the blocking zone 1025 and won't flow to the adhesive area 1024. Therefore, during filling with the liquid of the foam material 3, the function of the first hooks 103 will not be affected by the leakage of the foam material 3 and the first hooks 3 are able to successfully bind with a corresponding hook in future. Moreover, because the foam material 3 is stopped by the second hooks 104 and solidified on the blocking zone 1025, the foaming material 3 and the second hooks 104 are embedded and interrupted to each other such that the foam material 3 is well and firmly adhered to the adhesive fastener 1. In addition, in the practical manner, the height of the first hooks 103 is larger than the height of the second hooks 104 to save the usage of the material of the second hooks 104 and enable the second hooks 104 to have same function as a retaining wall.

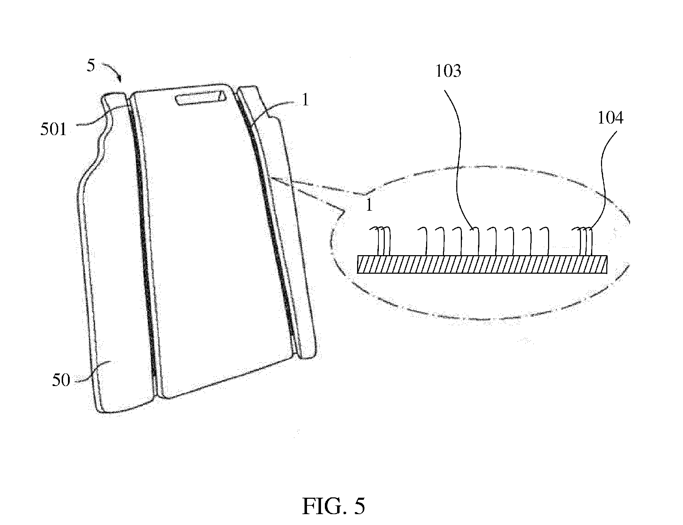

Now please refer to FIG. 5, which is a view illustrating a cushion with the adhesive fastener in the first embodiment of the present invention. The cushion 5 includes a foam body 50 and at least one adhesive fastener 1. The foam body 50 and the adhesive fastener 1 are integrally formed. The present adhesive fastener 1 is the same as the adhesive fastener 1 in the previous embodiment and includes the strip 10. Because the characteristics of each of the components and the connection relationship thereof are the same as the previous embodiment, the detail description is omitted herein. For example, the foam body 50 is embedded with the second hooks 104 of the adhesive fastener 1 and the foam body 50 and the second hooks 104 are interrupted to each other.

In addition, in the preferred embodiment, the foam body 50 further includes at least one concave 501 for disposing the adhesive fastener 1 to increase the assembly of the cushion 5 and any other items having corresponding adhesive fastening structure.

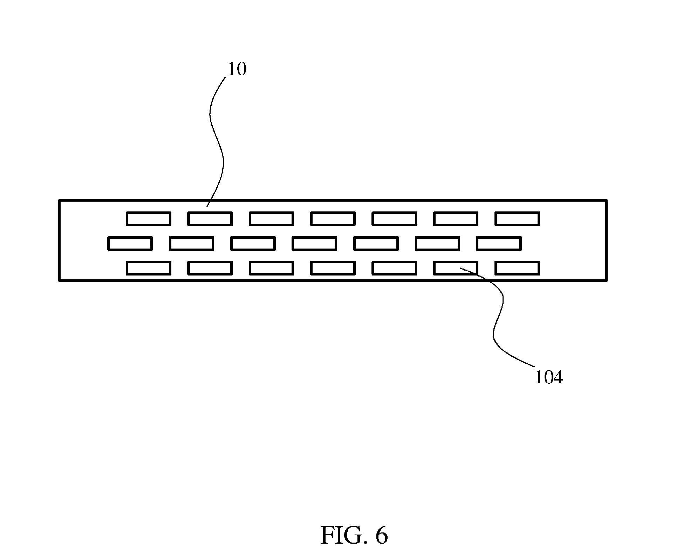

Now, please refer to FIG. 6, which is a view schematically illustrates arrangement of the second or peripheral hooks 104 on blocking zones 1025 of the adhesive fastener in the first embodiment of the present invention. As shown in FIG. 6, the second hooks 104 are arranged in a parallel and interlaced manner on the strip 10. The second hooks 104 in one row and in the other row are arranged with an offset existed between two rows.

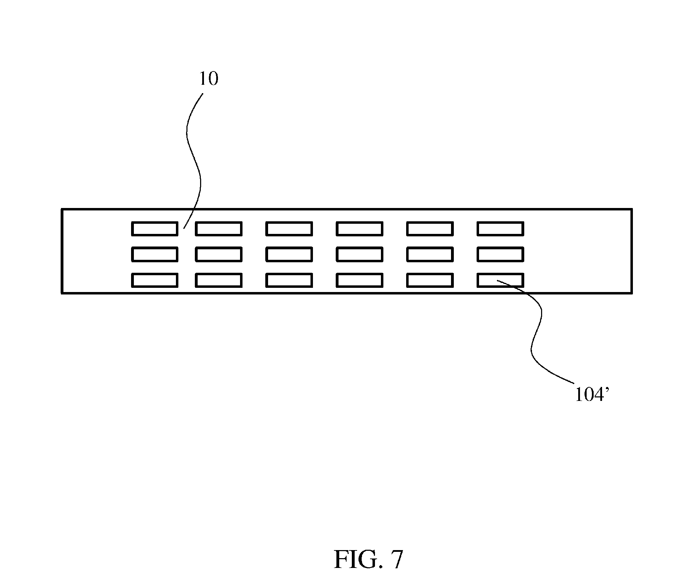

Please refer to FIG. 7, which is a view schematically illustrates arrangement of the second or peripheral hooks 104 on blocking zones 1025 of the adhesive fastener in a second embodiment of the present invention. As show in FIG. 7, the second hooks 104' are arranged in a parallel and aligned manner on the strip 10. The second hooks 104' in one row and in the other row are arranged without an offset existed between two rows.

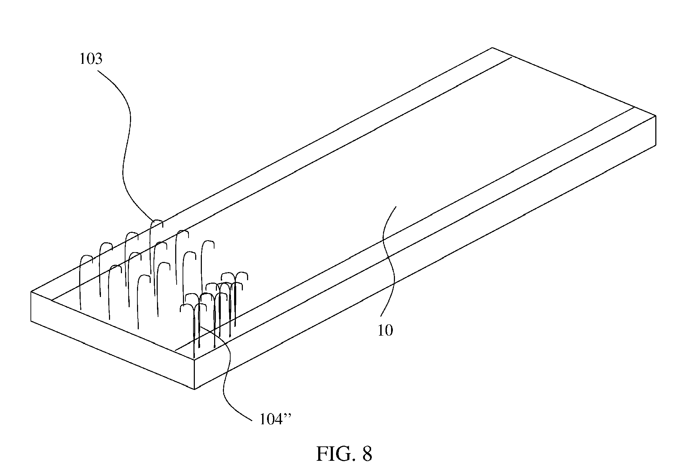

Please refer to FIG. 8, which is a view illustrating a hook of the adhesive fastener in third embodiment of the present invention. As shown in FIG. 8, the strip 10 includes the first hooks 103 and the second hooks 104". The shape of the first hook 103 is different from the shape of the second hooks 104". The form of the hooks 103 in the present embodiment is a single hook and the form of the second hooks 104" is a double hook. The second hooks 104" with double hook can strengthen the embedding condition of the foam material.

By using the adhesive fastener 1 provided in the present invention in the foam material, the cushion 5 with foam material is made with the adhesive fastener 1 can have a better yield to save the cost.

## Claims

1. An adhesive fastener for foam molding, comprising:
a strip including a surface;
a plurality of first hooks disposed on a first area of the surface of the strip with a first arranging density; and
a plurality of second hooks disposed on a second area of the surface of the strip with a second arranging density;
wherein the second area is peripheral to the first area and the second arranging density is greater than the first arranging density.

2. The adhesive fastener for foam molding of claim 1, wherein the first area is a central area on the surface of the strip.

3. The adhesive fastener for foam molding of claim 1, wherein a width of the second area is 1mm∼3 mm.

4. The adhesive fastener for foam molding of claim 1, wherein the first hooks and the second hooks are different in shape.

5. The adhesive fastener for foam molding of claim 1, wherein a height of the first hooks is smaller than a height of the second hooks.

6. The adhesive fastener for foam molding of claim 1, wherein a height of the first hooks is greater than a height of the second hooks.

7. The adhesive fastener for foam molding of claim 1, wherein the second hooks are arranged in a parallel and interlaced manner.

8. The adhesive fastener for foam molding of claim 1, wherein the second hooks are arranged in a parallel and aligned manner.

9. A cushion with adhesive fastener comprising a foam body and at least one adhesive fastener, the foam body formed by a foam material and the at least one adhesive fastener, the at least one adhesive fastener comprising:
a strip including a surface;
a plurality of first hooks disposed on a first area of the surface of the strip with a first arranging density; and
a plurality of second hooks disposed on a second area of the surface of the strip with a second arranging density;
wherein the second area is peripheral to the first area and the second arranging density is greater than the first arranging density.

10. The cushion with adhesive fastener of claim 9, wherein a height of the first hooks is smaller than a height of the second hooks.

11. The cushion with adhesive fastener of claim 9, wherein a height of the first hooks is greater than a height of the second hooks.

12. The cushion with adhesive fastener of claim 9, wherein the foam body includes at least one concave for disposing the at least one adhesive fastener.

13. The cushion with adhesive fastener of claim 9, wherein the foam material of the foam body is embedded with the second hooks of the at least one adhesive fastener.

14. An adhesive fastener for foam molding, comprising:
a strip including a surface;
a plurality of first hooks disposed on a first area of the surface of the strip with a first arranging density; and
a plurality of second hooks disposed on a second area of the surface of the strip with a second arranging density;
wherein the second area is peripheral to the first area and the second arranging density is greater than the first arranging density; and
wherein the second hooks are of a double hook shape.

15. The adhesive fastener for foam molding of claim 14, wherein the first hooks are of a single hook shape.
